# EUROPEAN PATENT APPLICATION

(11) **EP 1 560 219 A1**
(43) Date of publication of application: **03.08.2005**
(21) Application number: 05001905.8
(22) Date of filing: 31.01.2005
(51) Int. Cl.: G11B 33/04

(54) **Rack for cassettes**

(30) Priority: 02.02.2004 DK 200400153
(71) Applicant: KAASTRUP, Soren, DK-7870 Roslev (DK)
(72) Inventor: KAASTRUP, Soren, DK-7870 Roslev (DK)
(74) Representative: Nielsen, Leif L.

(57) **Abstract**

There is described a rack for box-shaped cassettes (8) and of the type with at least two walls (11, 12) for supporting two sides of the cassettes. In order to minimise the space requirement and to enable avoiding interspaces between the cassettes, and simultaneously to enable the cassettes to stand stable without risk of turning over in a rack which is full, the rack is peculiar in that each wall is provided with a surface formed of alternating ridges and slots (9, 10). For each two interacting walls there is provided a displacement of the surfaces so that the ridges (9) and the slots (10), respectively, in a wall (11) are located opposite respective slots (10) and the ridges (9) in the interacting wall (12). The widths of the slots and the ridges are identical and will correspond to the thickness of a cassette.

## Description

The present invention concerns a rack for box-shaped cassettes and of the type with at least two walls for supporting two sides of the cassettes, where each wall is provided with a surface formed of alternating ridges and slots. The cassettes have uniform size and are preferably intended to contain CDs, DVDs, audio tapes, video tapes and the like.

In this application, by a cassette is meant any item having largely uniform size and which is designed with box shape, preferably with six walls disposed perpendicularly to each other.

The rack may be used in private homes or in business where it is desired to have a storage system for a greater or lesser number of cassettes. The rack may thus also be used commercially as display unit in retail stores.

A large number of rack types of the kind mentioned in the introduction are known. These prior art racks are arranged for suspending on a wall or the like, or for standing on a table. The cassettes stand in the racks at a given angle in relation to the walls, as these are preferably oriented perpendicularly to the walls.

Prior art racks include two or more walls that support two adjacent or two opposed sides or three sides of the cassettes. The racks may be arranged as two walls disposed perpendicularly to each other or as a box-like rack with three closed sides and an open side for taking out and inserting the cassettes. In such racks smooth walls may be used; however, hereby there is risk of the cassettes turning over.

In order to relieve the problem of overturning cassettes, the walls are often provided with separating flanges that project from the walls and support a narrow edge area of the cassettes. This, however, implies drawbacks by forming interspaces between the cassettes and thereby an increase of the space requirements and interspaces where dust may accumulate and where it is difficult to clean. However, interspaces between the cassettes are often desirable for enabling getting a hold about the cassettes when they are to be taken out of a full rack.

Alternatively, racks may be arranged as a rod-shaped body or a U- or V-shaped profile with notches or grooves for accommodating the cassettes.

The prior art racks are adapted for containing a given number of cassettes and may be provided with modular shape for assembling several racks so that the user may build or extend his storage system according to need. When extending, one is required to perform extension with a rack adapted to contain a given number of cassettes even though there is need for storage of a single cassette or a small number of cassettes. An assembled storage system may thus often contain a number of empty spaces which may give rise to the stored cassettes turning over if the rack is not of the type with separating flanges. This may also increase the need for space and provide room where dust accumulates which is difficult to clean in the narrow grooves between the separating flanges.

From US 4,375,850 there is known a storage box for storing box-shaped cassettes, where the storage box is of the type with at least two walls and where the walls are provided with a surface formed of alternating ridges and slots.

In US 4,375,850 we are not speaking of closely packed cassettes, but only of a storage box where the side edges on the plastic packing of the cassettes are accommodated in the slots, thus providing a rather space-consuming design.

It is the purpose of the present invention to relieve the above drawbacks in racks and to indicate rack that minimises the need for space and which enable avoiding interspaces between the cassettes and which at the same time enables the cassettes to stand stable without risk of overturning in a rack which is not entirely full, and where simultaneously it is easy for a user to take out a cassette from a full rack. Furthermore, it is also a purpose to indicate a holder which may be extended in a very flexible way so that there may be provided a storage system without empty places.

According to the present invention this is achieved with a rack of the type mentioned in the introduction which is peculiar in that for two interacting walls there is provided a displacement of the surfaces so that the ridges and the slots, respectively, in a wall are located opposite respective slots and the ridges in the interacting wall, and that the width of the slots and the ridges are identical.

Typically, the cassettes to be used together with a holder according to the invention are to have two large parallel rectangular side faces that are mutually opposed and provide the cassette height/length. These large side faces are connected along their edges with narrow elongated side faces that stand perpendicularly to the large side faces and which are connected with one or the other of the large side faces in order to form a closed cassette and which defines the thickness of the cassette.

The width of the slots is dimensioned according to the thickness of the cassettes so that there is no interspace between the cassettes when placed in the holder. The cassettes become mutually displaced with a displacement corresponding to the height/depth of the ridges and the slots, respectively. This displacement may be chosen so that there is a sufficient large corner area of the cassette which the user may get hold about. The distance on each side of a cassette will correspond to the thickness of the cassette. Usually it will be possible with a light and comfortable grip about the cassettes even if the cassettes are disposed in mutual abutment in a space-saving way.

When the cassettes stand in the rack they will be in close contact, and simultaneously an edge area of the cassette at at least one of the interacting sidewalls will be located in a slot and thereby be prevented from overturning, irrespectively if there are empty spaces at the side of the cassette in question.

According to a particular embodiment, the rack according to the invention is peculiar in that it is formed by modules that each include a slot and a ridge and which are provided with connecting means for connecting to an identical module. It is hereby possible to extend the rack in a very flexible way, as the user just mounts the number of modules needed or accommodated, so that there may be created an unnecessary large storage system without empty spaces.

Furthermore, the modular system is advantageous as it enables buying supplementing modules for expanding the storage system according to need.

At the same time, the use of identical modules will enable simple manufacturing. It is thus possible to make a technically simple tool for moulding the modules. Due to the small size and a simple shape, an item may be produced by e.g. plastic injection moulding with a short cycle time due to rapid cooling.

It is possible to make the racks as a modular system that includes a single module which provides adjacent ridge and slot in the finished rack or of two interacting modules providing ridge and slot, respectively, in the finished rack. The modules will preferably have coupling means in the shape of interacting tenons and holes that may engage by snap action or which may hold the modules together by press fit.

According to a further embodiment, the rack according to the invention is peculiar in that the slots/ridges are designed with three straight side faces as seen in section perpendicularly to the longitudinal direction of the slots/ridges, and that the side faces are provided perpendicularly in relation to each other. In this embodiment, a cassette will be disposed in a slot with a side edge in contact with the bottom of the slot and with side edge areas of the large side faces of the cassette in contact with the sidewalls of the slot. Another side edge of the cassette will be placed against the top side of an interacting ridge. There is achieved a particularly secure and stable accommodation of the cassette, as a side edge area is accommodated in a slot with a width largely corresponding to the thickness of the cassette.

According to a further embodiment, the rack according to the invention is peculiar in that slots/ridges are designed with curving side faces that largely have a sinusoidal shape as seen in a sectional view perpendicularly to the longitudinal direction of the slots/ridges. In this embodiment, a cassette will be placed in a wavy slot with side corner of the cassette in abutment with the curving walls of the slot and will have another side edge of the cassette in contact with the top of the top of the interacting wavy ridge. This embodiment may accommodate cassettes even if there is some tolerance deviation in the thickness of the cassettes and will be particularly cleaning friendly as no sharp corners will appear for the slots/ridges where it is difficult to get in with cleaning cloths or similar.

According to a further embodiment, the rack according to the invention is peculiar in that the slots/ridges are designed with two straight side faces that largely have sawtooth shape as seen in section perpendicularly to the longitudinal direction of the slots/ridges. In this embodiment, a cassette will be placed in an angular slot with side corners of the cassette in abutment with the straight walls of the slot and will have a second side edge of the cassette in abutment with the top of the top of the interacting wavy ridge. This embodiment may accommodate cassettes even if there is a certain tolerance deviation in the thickness of the cassettes.

According to a further embodiment, the rack according to the invention is peculiar in that it includes two adjacent walls that are provided perpendicularly to each other, or two parallel walls disposed opposite each other at a given distance. If two adjacent walls are used which are disposed perpendicularly to each other, cassettes may be accommodated even if there is some tolerance deviation in the cassette dimensions for height/length, i.e. deviation the dimensions of the cassettes for the large side faces. By using walls opposite each other, the distance between these walls will correspond to the height or length of the cassettes to be placed in the rack. Also here there will be achieved a very secure retention without the cassettes overturning, even if the rack is not entirely full.

According to a further embodiment, the rack according to the invention is peculiar in that it includes three walls disposed perpendicularly to each other for forming a U-shaped rack for storing the cassettes inside the U. This embodiment provides a particularly stable retention, as the cassettes may be secured at three sides, and simultaneously this rack may be suited for assembling a storage system with a row of juxtaposed racks, which e.g. may be suspended on a wall or stand on a shelf/table.

According to a further embodiment, the rack according to the invention is peculiar in that it includes three walls disposed perpendicularly to each other for forming a T-shaped rack for storing the cassettes in the two corners between the stem of the T and each of the transverse branches of the T. This embodiment is suited for disposition on wall or on shelf/table and provides possibility of storing two parallel rows of cassettes in the rack so that it may be made with a moderate length.

According to a further embodiment, the rack according to the invention is peculiar in that it is formed by four walls that are disposed perpendicularly to each other for forming an X-shaped rack for storing the cassettes in the four corners between the branches of the X. This embodiment is particularly useful for placing on shelf/table, e.g. with the possibility of rotation about an axis perpendicularly to the X. This rack provides possibility of storing four parallel rows of cassettes in the rack so that with even short length it may include a considerably number of cassettes.

According to a further embodiment, the rack is peculiar in that the length of the ridges and the slots, respectively, is between 10 and 130 mm, that the height/depth of the ridges and the slots, respectively, is between 3 and 20 mm, and that the width of the ridges and the slots, respectively, is between 8 and 14 mm. A rack with these dimensions is particularly suited for cassettes for storing CDs.

According to a particular embodiment, the rack may be formed by a bent plate which is substantially Σ-shaped with slots in the back that interact with projections in the side branches of the Σ, and with projections in the back that interact with slots in the side branches of the Σ.

This embodiment may easily be made by means of a punching process succeeded by a bending process where it is manufactured of sheet metal, or possibly of plastic. The rack may, according to this embodiment, be provided on a foot where it can stand on a floor or a table, or it may be adapted to be suspended on a wall. The punching and bending of the plate for making of the rack may be done entirely automatically, considerably reducing the production costs.

The storage unit according to the invention has a hollow interior for storing a rack for box-shaped cassettes, where the storage unit is peculiar in that the rack is displaceably mounted in the interior of the storage unit, so that it may be displaced into and out of the storage unit according to need, where the displacement of the rack is manual or automated.

By providing the rack inside a storage unit there is achieved a substantial relief of the cleaning work, as dust will not be deposited on the individual cassettes, e.g. CD-cassettes, but only on the outer walls of the storage unit which may easily be kept clean. Besides, the CDs may be stored in the rack inside the storage unit without using a cassette cover, as the CD discs inside the storage unit will be protected against dust. In a preferred embodiment, the storage unit will have a height somewhere between 60 and 140 cm, preferably between 80 and 120 cm. It is hereby achieved the further advantage that the user, by vertical displacement of the rack out of the storage unit, achieves that the CDs come up to a height where the user is not required to bend down to floor level for looking after and selecting the CD he or she may want to use. The displacing of the rack may possibly be done manually, possibly by means of a gas spring, or it may be made automatic and possibly remote controlled, where the remote control of the rack possibly may be integrated in the remote control of a music set.

In an embodiment, the storage unit may be rotatable and/or the rack is rotatable in relation to the storage unit. A rotatable storage unit or a rack, which is rotatable in relation to the storage unit, will enable easier accesses to all cassettes (e.g. CDs) that may be stored in the storage unit. In an embodiment, the storage unit may be rotatably connected to a foot in such a way that rotation about a vertical axis of symmetry for the storage unit may be achieved. However, there is no requirement that this axis of rotation is to be an axis of symmetry.

In a further, special embodiment, the storage unit may be equipped with means for automatic selection of cassettes, and possibly light indication of selected cassettes. For automatic selection of cassettes, the means may possibly be remotely controlled where the remote control of these means may be an integrated part of the remote control of a music set or it may be integrated in the remote control of a large multimedia unit including television, music set, video machines, DVD players etc. Hereby is achieved the advantage that the user, for example, may change between the music pieces that he or she may desire to listen to, without having to get into the stack of CDs for finding them. Possibly, the CDs in the rack may be arrayed so that selection and change of CDs already listened to with those desired to be heard, may be effected in a suitable way.

Furthermore, in an embodiment the storage unit may be an integrated part of a piece of furniture or a music set. In a special embodiment, a storage unit according to the invention may be integrated in a music set, possibly by providing it with a loudspeaker outlook, for easier blending with the other equipment at which is possibly stands close to. In another embodiment, it may possibly be integrated in a piece of furniture, such as a table or a cabinet for a music set. Hereby is achieved the advantage that the storage unit with e.g. the CD-rack is integrated into the other products which the user may have in his home. Besides, a visual integration of the storage unit is achieved in the room itself that it may be put into, so that it is present and appears when functioning, i.e. when e.g. CDs are selected. On the other hand, when not in function, it will be present with lightness, melting into the surroundings. In order to achieve these visual properties with the storage unit, it will have widely different designs in different embodiments. This may e.g. be a box-shaped storage unit, a cylindric storage unit, or it may have any other shape which is suitable in relation to the surroundings in which it is placed.

In the above, the storage unit is explained with regard to storage of CDs and CD-cassettes, but this is only done for the sake of clarity. With regard to the claims, the scope is not limited to CDs or CD-cassettes. The rack and the storage unit may be used for storing other kinds of cassettes, such as video cassettes or DVD cassettes etc., or a combination of different types of cassettes.

The rack according to the invention may be designed in other ways than indicated above and may be made from different materials as e.g. plastic, wood and metal. The rack may be made of rigid materials, or materials with a certain elasticity in the surface and which may yield for adapting to cassettes with dimensional deviation compared with standard size.

The invention will now be explained more closely with reference to the accompanying drawing, wherein:

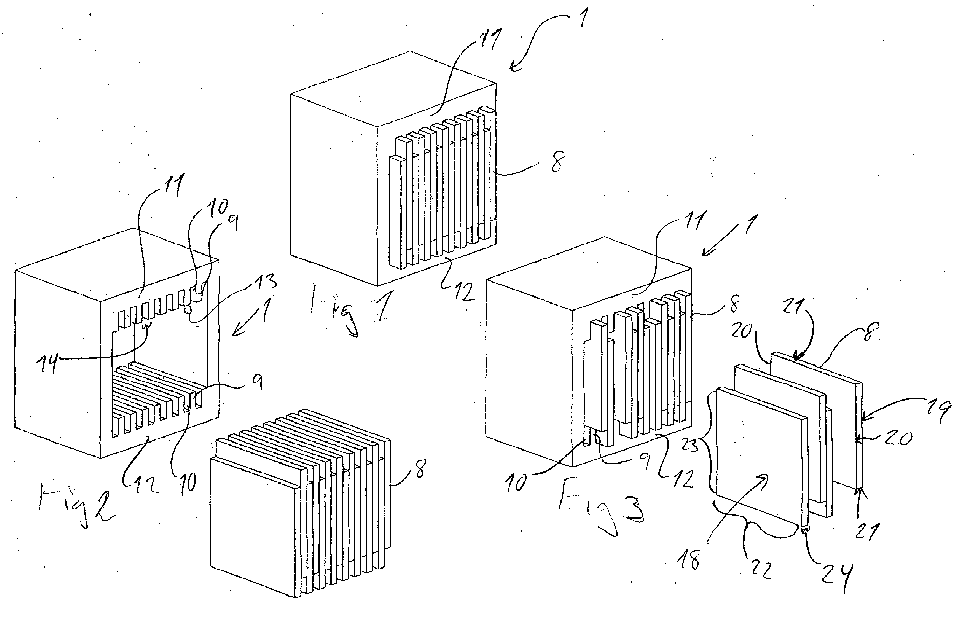

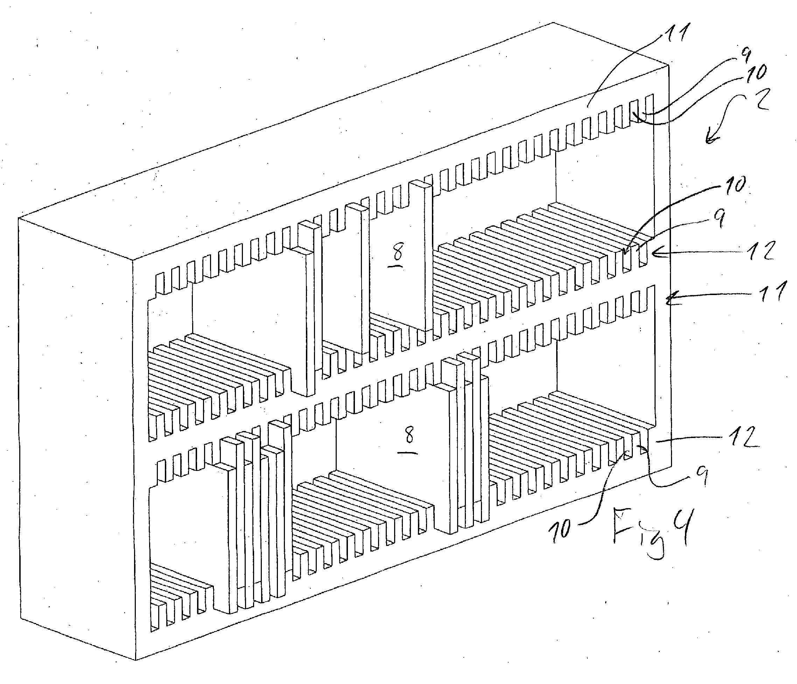

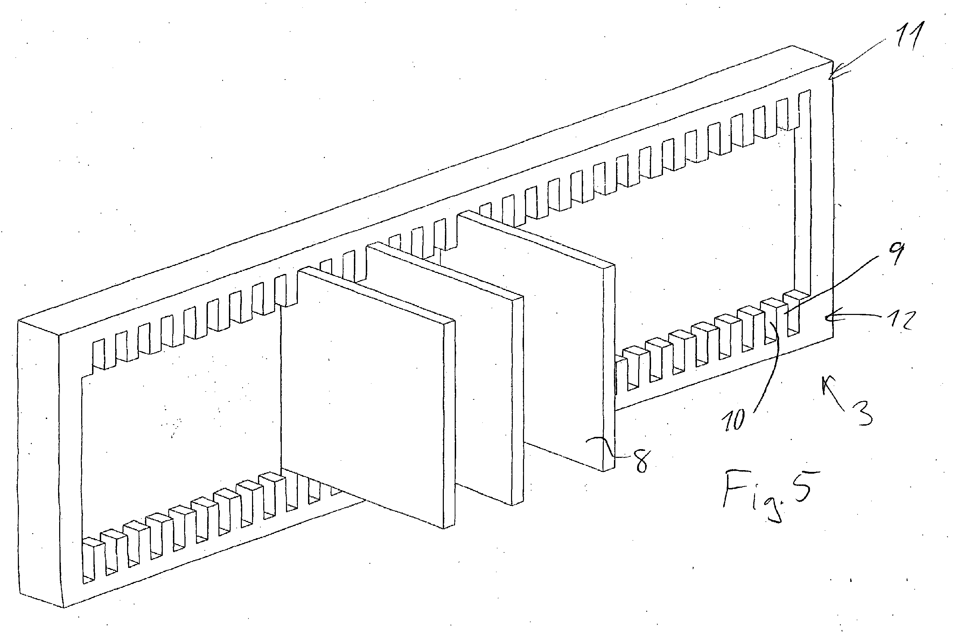

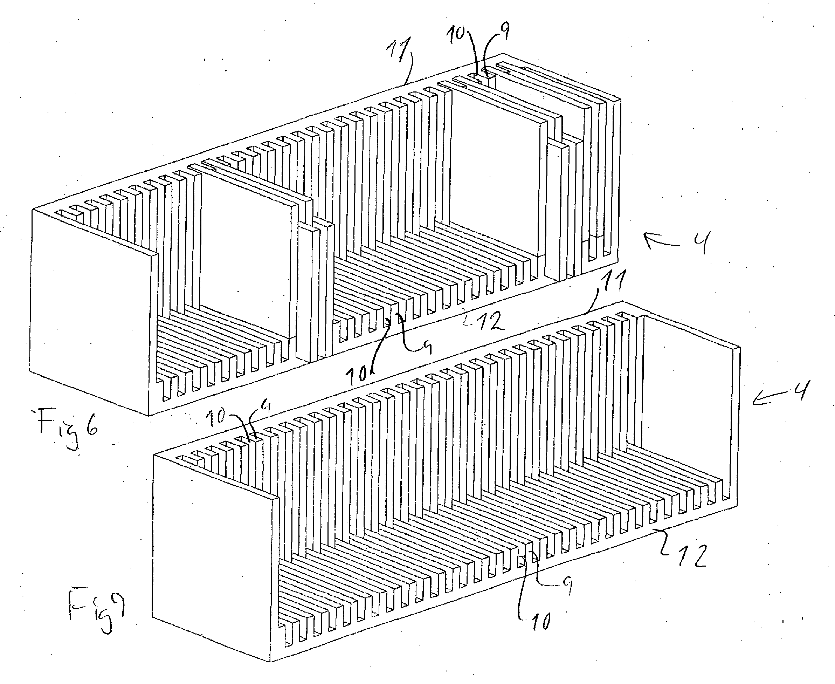

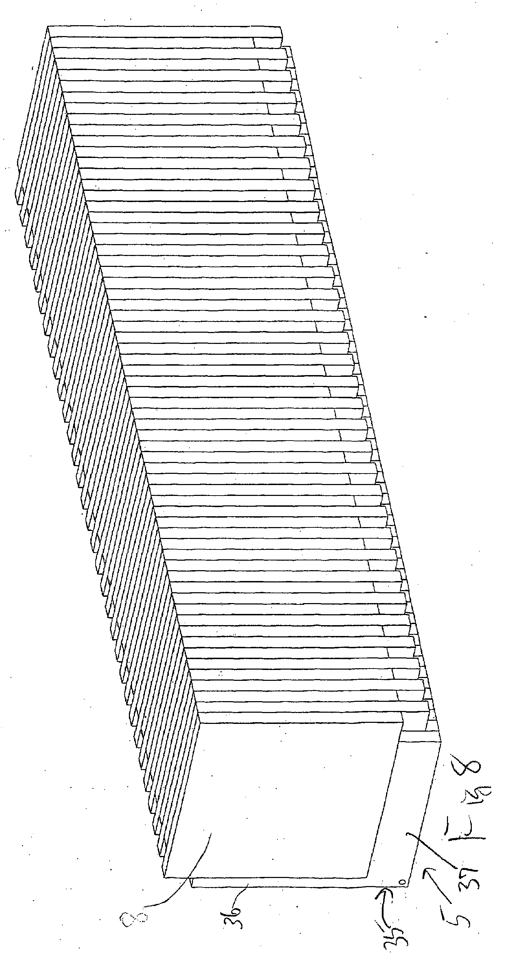

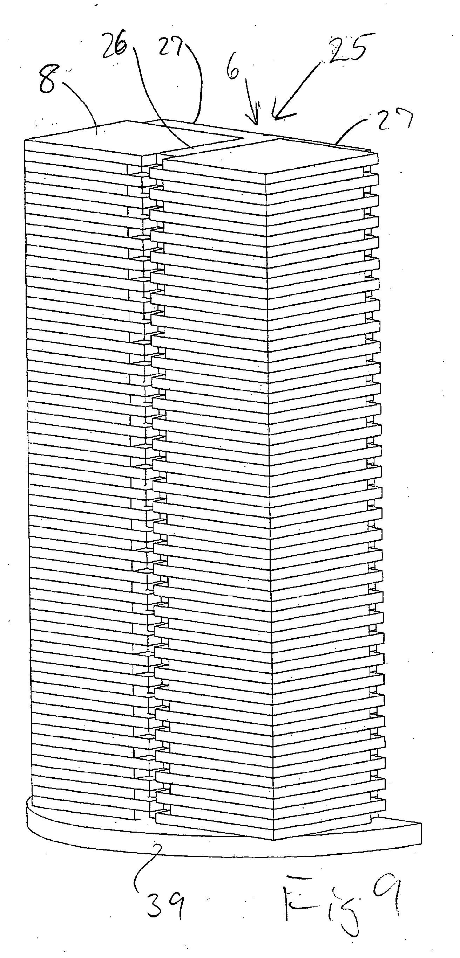

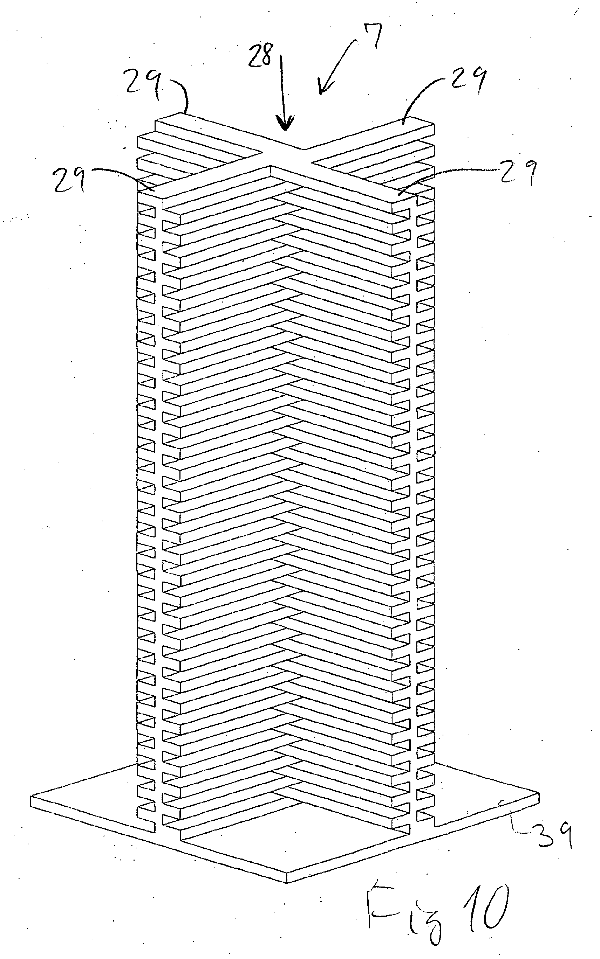

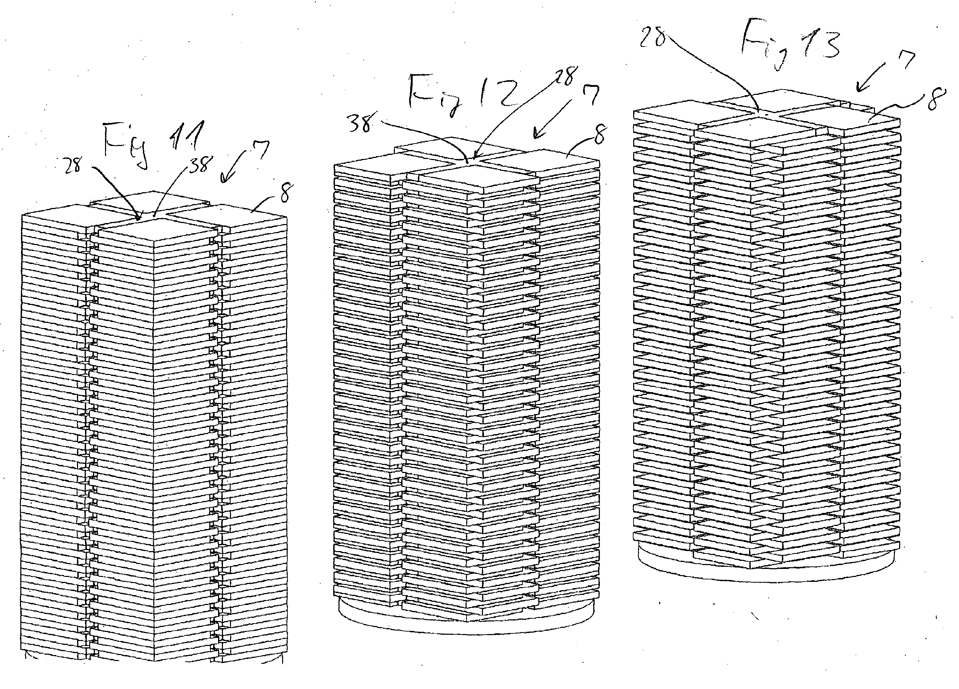

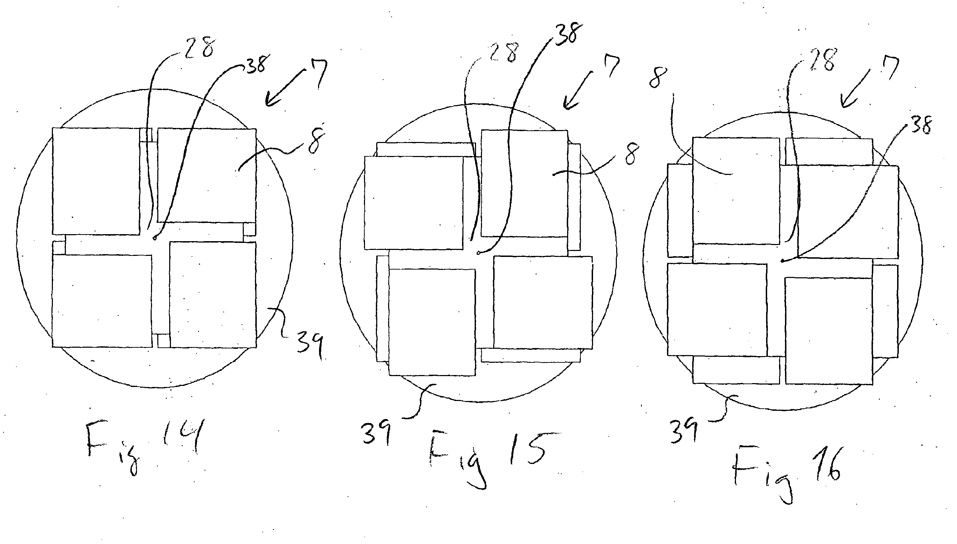

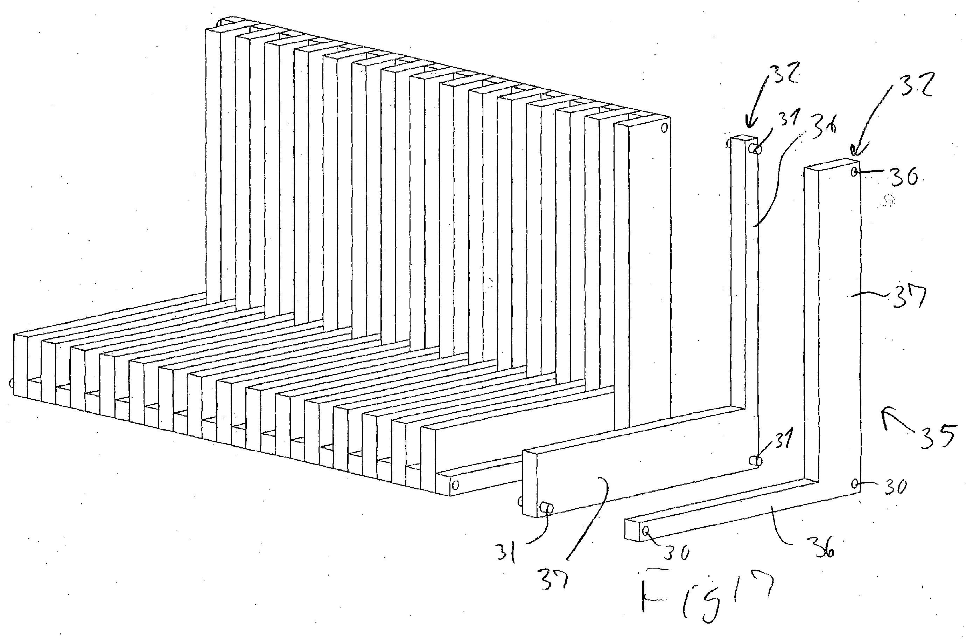

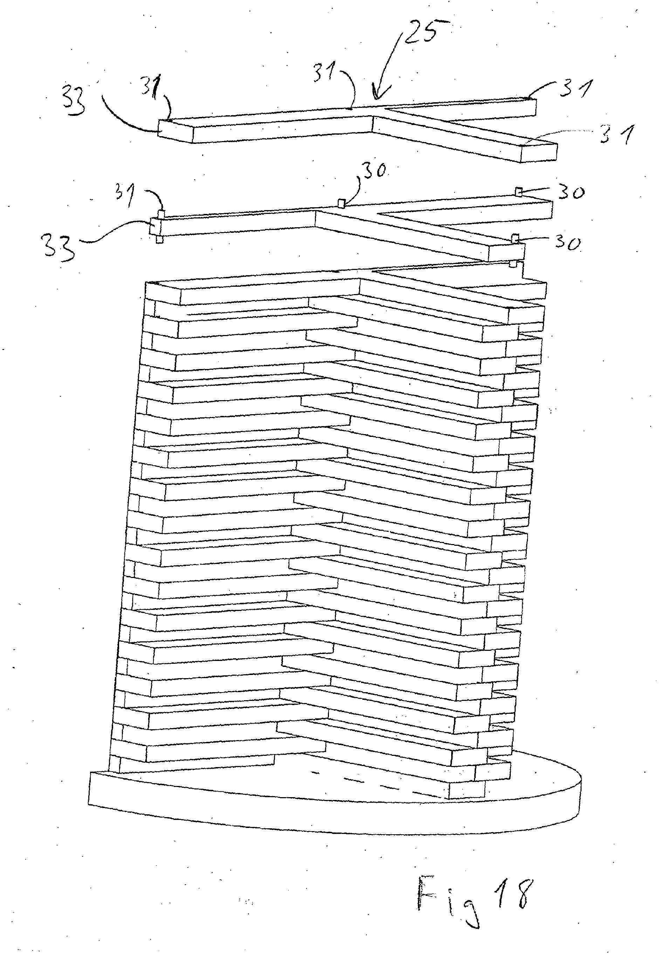

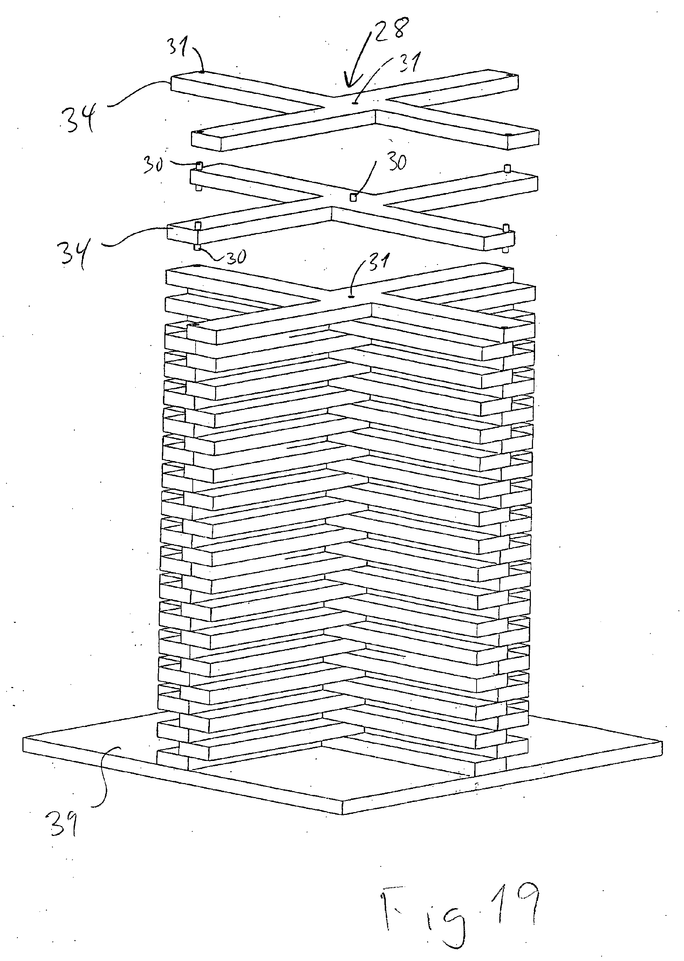

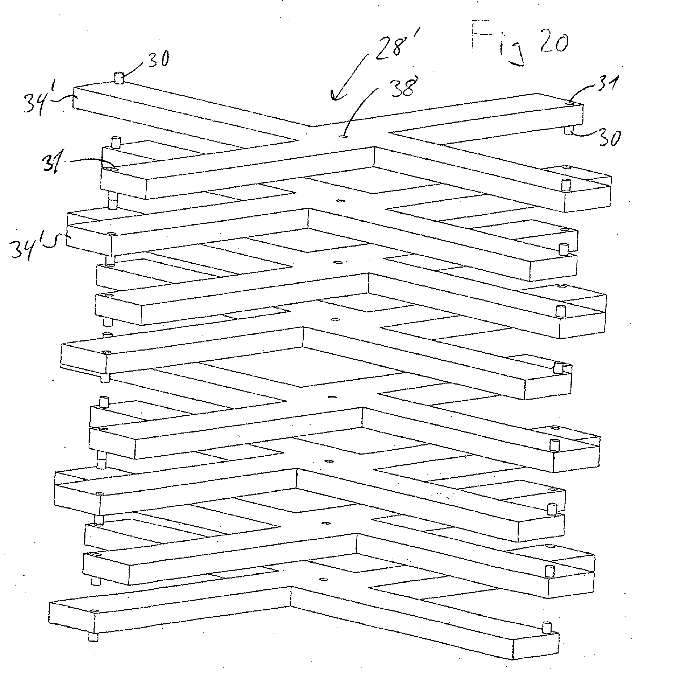

- Figs. 1-3: show a first embodiment of a rack according to the invention;
- Fig. 4: shows a second embodiment of a rack according to the invention;
- Fig. 5: shows a third embodiment of a rack according to the invention;
- Fig. 6-7: shows a fourth embodiment of a rack according to the invention;
- Fig. 8: shows a fifth embodiment of a rack according to the invention;
- Fig. 9: shows a sixth embodiment of a rack according to the invention;
- Fig. 10: shows a seventh embodiment of a rack according to the invention;
- Figs. 11-13: show the rack shown in Fig. 10 with cassettes inserted in different ways;
- Figs. 14-16: show the racks shown in Figs. 11-13 seen from above;
- Fig. 17: shows modular assembly of the rack shown in Fig. 8;
- Fig. 18: shows modular assembly of the rack shown in Fig. 9;
- Fig. 19: shows modular assembly of the rack shown in Fig. 10;
- Fig. 20: shows another kind of modular assembly of the rack shown in Fig. 10;
- Fig. 21: shows a special embodiment of a rack according to the invention;
- Fig. 22: shows further a second embodiment of a rack according to the invention;
- Fig. 23: shows a detail of the rack shown on Fig. 22;
- Fig. 24-25: again show an embodiment of a rack according to the invention;
- Fig. 26: shows modular assembly of a rack according to the invention, where the modules are formed of U-sections;
- Fig. 27: shows a rack according to the invention which is modularly assembled of U-sections;
- Fig. 28: shows a modularly assembled rack according to the invention, where the modules are formed of a number of Z-sections;
- Fig. 29: shows a storage unit for a rack according to the invention;
- Fig. 30: shows a storage unit according to invention which has cylindric shape; and
- Fig. 31: shows a transparent view of a storage unit according to the invention.

In the subsequent Figures, identical or corresponding part will be designated with the same designation, and a detailed explanation to each Figure will thus not be given.

The designations 1 - 7 indicate first to seventh embodiment of the rack in the form of racks for CDs. Cassettes 8 is illustrated in the form of CD casings. The designation 9 designates ridges and 10 indicate slots. The designations 11, 12 designate support walls for the cassettes. The designations 13, 14 designate width on the ridges and the slots, respectively. The designations 15-17 designate straight side faces for the slots/ridges.

The designations 18, 19 designate the large side faces for a cassette and the designations 20, 21 designates small side faces that are disposed between the large side faces 18, 19 for a cassette 8. The designations 22-24 designate length, height and thickness, respectively, for cassette 8.

The designation 35 designates a V-shaped wall configuration with the two legs 36, 37 of the V disposed perpendicularly to each other. The designation 25 designates a T-shaped wall configuration, where 26 designates the stem of the T and 27 designates the cross arms of the T. The designation 28 designates an X-shaped wall configuration, where 29 designates each of the branches of the X.

The designation 30, 31 designates interacting coupling means in the form of pin and hole in modular units which generally are termed 32-34 and which are intended for use for making a rack 1-7 according to the invention. The holes may be formed in each modular unit in order to place a through-going pin extending at both sides of a modular unit which is assembled alternately with modular unit where no pin is put into the holes. The pins may also be moulded into every other modular unit. Alternatively, pins are placed on one side of the modular unit and holes on the other side of the modular unit, so that each modular unit has both pins and holes.

The designation 38 designates a hole for a centre shaft about which a rack may rotate, e.g. when it is placed on a foot 39, which may be round, square or have other shape.

In all racks 1-7, the cassettes 8 are placed so that two side edges thereof engage ridges/slots 9, 10 on the supporting walls 11, 12, 26, 27, 29.

On Fig. 21 is seen a particular embodiment of a rack 40 according to the invention. This embodiment is particularly suited for storing CD-cassettes 41. The sides 42 of the rack 40 are designed with alternating ridges 43 and slots 45, where the width of the slots 45 and the ridges 43, respectively, correspond to the thickness of a CD-cassette 41. Between the sides 42 off the rack 40 there is provided number of connecting members 44 which are disposed with mutual spacing which is the same between all connecting members 44. The spacing between two succeeding connecting members 44 corresponds to the thickness of a CD-cassette 41. The connecting members 44 hereby constitute a number of ridges, while the intermediate area 46 between two succeeding connecting members 44 constitutes a slot. According to international standards, it applies for CD-cassette 41 (as well as for DVD-cassettes and video cassettes) that the large side faces of a CD-cassette 41 are substantially rectangular. In the rectangle constituting the large side faces of the CD cassette 41, the long side is termed the length of the CD cassette 41, while the short side is termed the height of the CD cassette 41.

The inner spacing between the sides 41 of the rack is then adapted to the height 41 of the CD cassette. By the inner spacing is meant the distance between the inner sides 48 of the sides 42 of the rack 40. The spacing between the outer sides 50 of the sides of the rack is adapted to the length of a CD cassette 41. The depth of the slot (46) located between two succeeding connecting members 44 will be of such dimension that it corresponds to the difference between the length and the height of a CD cassette 41. When a CD cassette 41 is placed in the slot (46) constituting the interspace 46 between two succeeding connecting members 44, the CD cassette 41 will be supported on its two large side faces by the two ridges constituted by two succeeding connecting members 44. Alternatively, a CD cassette 41 may be disposed in the rack 40 so that one of the small side faces running along the length of the CD cassette 41 is disposed against a ridge 43 which is constituted by one of the projections on the sides 42 of the rack 40, so that the two large side faces are supported by two succeeding ridges 43 in the sides 42 of the rack. In this way is achieved a very compact stacking/storage of CD cassettes 41 which simultaneously enables getting hold of every one of the placed CD cassettes 41 by the fingers.

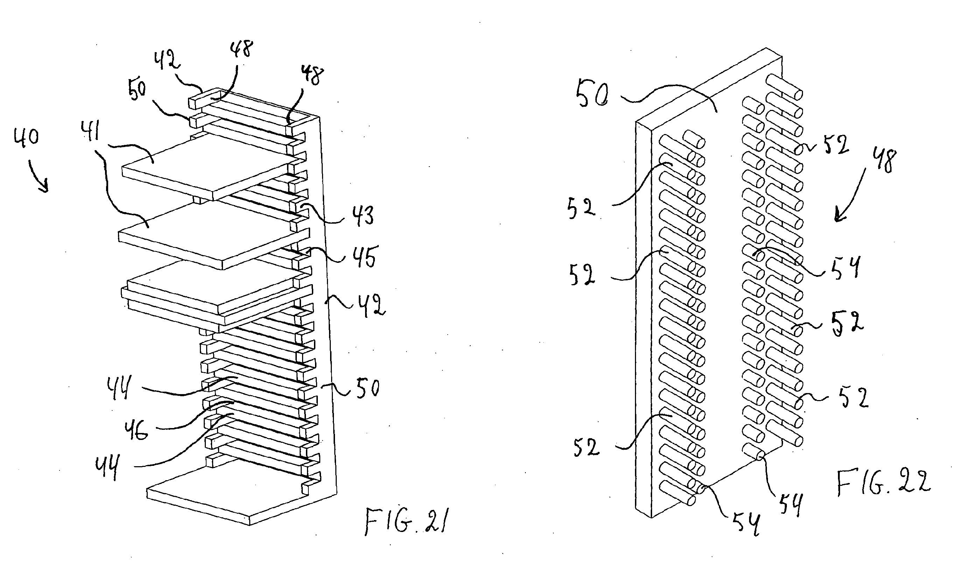

On Fig. 22 is seen a particular embodiment of a rack 48 according to the invention, which is suited for hanging on e.g. a wall. The rack 48 mainly comprises a back plate 50 on which is provided four rows of projections 52 and 54. In each row, the spacing between two succeeding projections 52 or 54 corresponds to the thickness of a CD cassette 41.

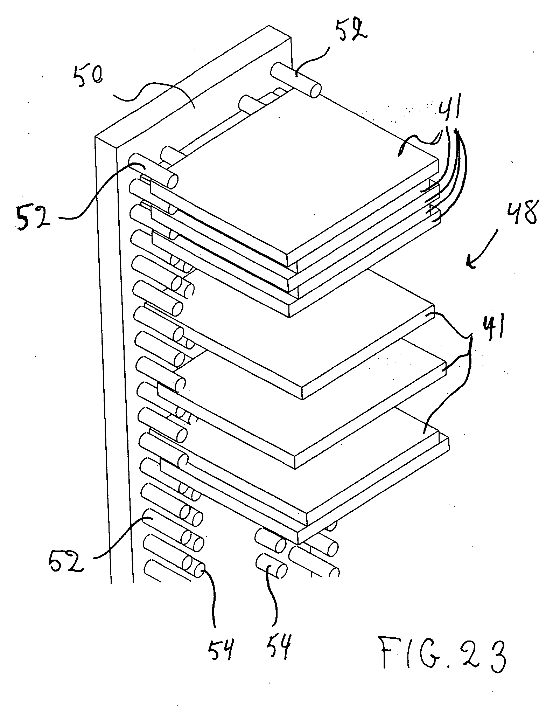

On Fig. 23 appears a detail of a rack 48 as described in Fig. 22, in which is provided a number of CD-cassettes 41. As seen on the Figure, the inner spacing between the two outermost rows of projections 52 is adapted to the height of a CD cassette 41, while the outer spacing between the two outermost rows of projections 52 is adapted to the length of a CD cassette 41. The height of the projections 54 on the two middle rows corresponds to the difference between the length and the height of a CD cassette 41. By placing the CD cassette 41 as shown on the Figure, it is possible to achieve a very compact storage of CD-cassettes 41 where at the same time it is possible to take out any of the CD cassettes 41 by means of the fingers.

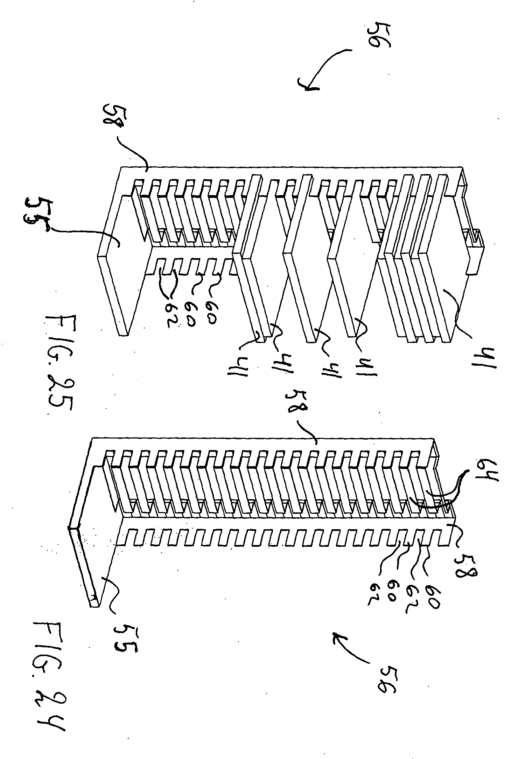

On Fig. 24 is furthermore seen a special embodiment of a rack 56 according to the invention. The rack 56 here stands on a foot 55 so that it e.g. may stand freely on a floor or a table. Along the sides 58 of the rack 56, there is a similar system of projections 60 and interspaces 62 between the projections 60, as on Fig. 21. Hereby is formed a system of equidistant slots and ridges. The width of the ridges corresponds to the thickness of a CD cassette 41. In the back section of the rack 56 there is also provided a number of projections 64 which are mutually disposed so that the distance between them corresponds to the thickness of a CD cassette 41. The projections 60 that are provided in the sides 58 of the rack, and those (64) provided in the back section of the rack, are mutually staggered so that the projections 64 in the back side of the rack are at level with the slots (62) in the sides 58 of the rack.

On Fig. 25 is seen the same embodiment of a rack 56 according to the invention as shown on Fig. 24. On the Figure is shown a number of CD cassettes 41 disposed in the rack 56. As seen, the CD cassettes 41 are placed in substantially the same way as on Fig. 21, and as it may be seen on Fig. 23. A compact storage of CD cassettes 41 will thus also be achieved, though it will be possible to take out individual CD cassettes 41 among the others by means of the fingers only.

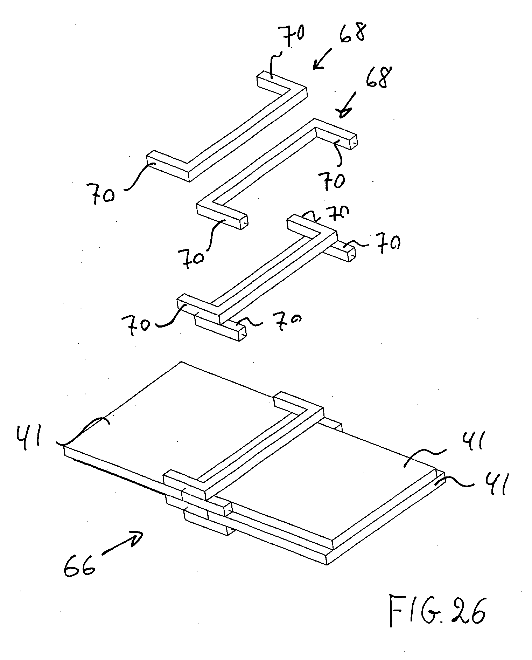

On Fig. 26 it is illustrated how one may build up a rack 66 according to the invention consisting of a number of U-sections 68 that are superposed each other with the branches 70 alternately to one and the other side. Hereby is formed a system of ridges and slots at both sides of the rack 66 which looks like the system of ridges and slots indicated on Fig. 21. A great advantage of this embodiment is that one may expand the rack 66 according to need.

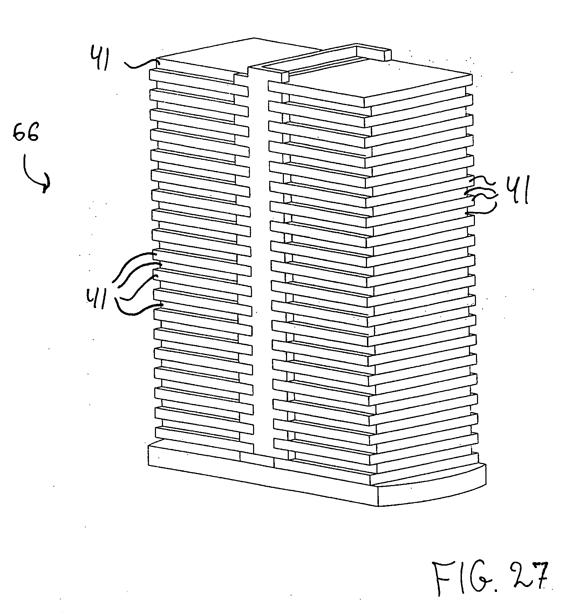

On Fig. 27 is seen a rack 66 according to the invention which is built up of the U-sections 68 shown on Fig. 26. The rack 66 on the drawing is shown filled with CD cassettes 41.

As may be seen on the Figure a very compact unit is hereby achieved which may readily be extended in height, in that this may be provided by adding further U-sections 68 as indicated on Fig. 26. A rack 66 as described on Figs. 26 and 27 may thus be sold as a basic rack with a certain number of U-sections 68, to which one may provide a number of assembly kits that may be purchased independently thereof. This may provide a great saving for the buyer and user of such a rack 66, as he does not need to buy an entirely new rack 66 as his CD collection expands, but may suffice with just adding some U-sections 68 to the rack 66 that he already has.

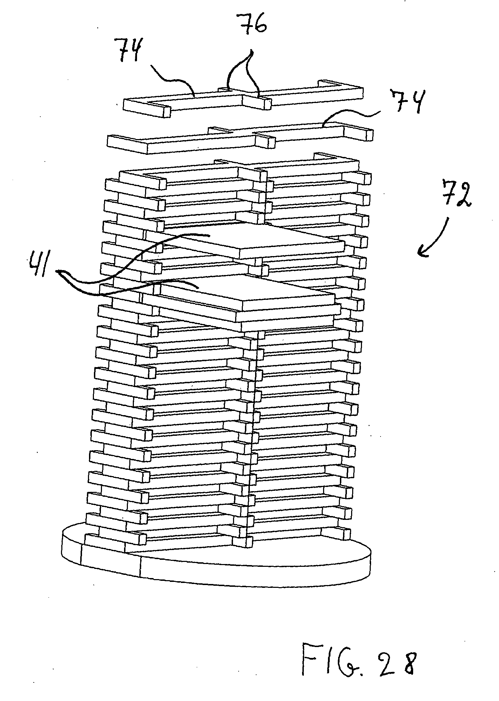

On Fig. 28 is seen a rack 72 which is built up of a number of sections 74 which is substantially designed as a Z with a cross bar 76. In reality it is two U-sections 68 that are disposed in continuation of each other. The sections 74 are placed upon each other so that one section 74 will always be mirrored relative to the section 74 closest thereto. Hereby is formed a double-sided double rack that enables a very compact storage of CD-cassettes 41, where the CD-cassettes 41 are standing relatively to each other in the same way as shown on Figs. 21-24.

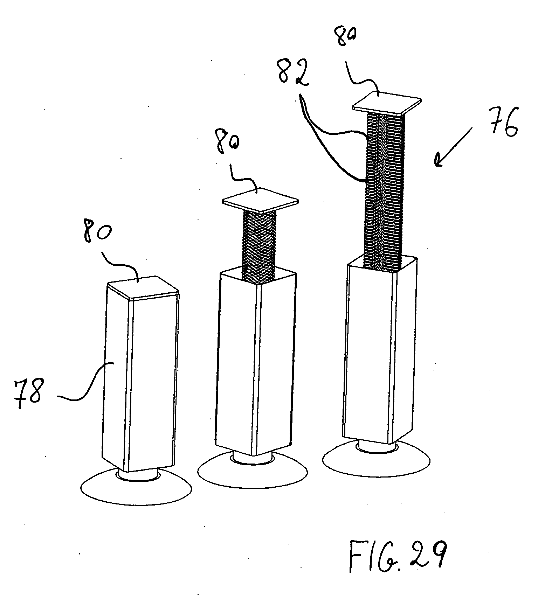

On Fig. 29 is seen a rack 76 according to the invention, which is substantially similar to the rack shown on Fig. 10. In contrast to the rack shown on Fig. 10, the rack 76 shown on Fig. 26 is provided inside a storage unit 78. The top 80 of the rack 76 constitutes the lid of the storage unit 78. If interested in listening to a certain piece of music, or when desiring access to a CD cassette 41, then you are only to take this rack 76 out of the storage unit 78, and when finished with using the CDs, you may put them back into the rack and close the storage unit 78 by moving the rack 76 down into the storage unit 78 again. The top 80 of the rack then automatically closes the storage unit 78. A rack 76 shown on Fig. 26 will therefore not collect dust in between the CD cassettes 41, because they are entirely enclosed in the storage unit 78. Therefore is achieved a system which is easy to keep clean compared with prior art systems. The rack 76 is equipped with light indicators 82, possibly LEDs (light diodes) or LCDs (liquid crystal diodes).

The storage unit 78 is rotatably connected to a foot 84 in such a way that rotation about a vertical axis of symmetry for the storage unit 78 may be achieved. However, there is no requirement that the axis of rotation is to be an axis of symmetry.

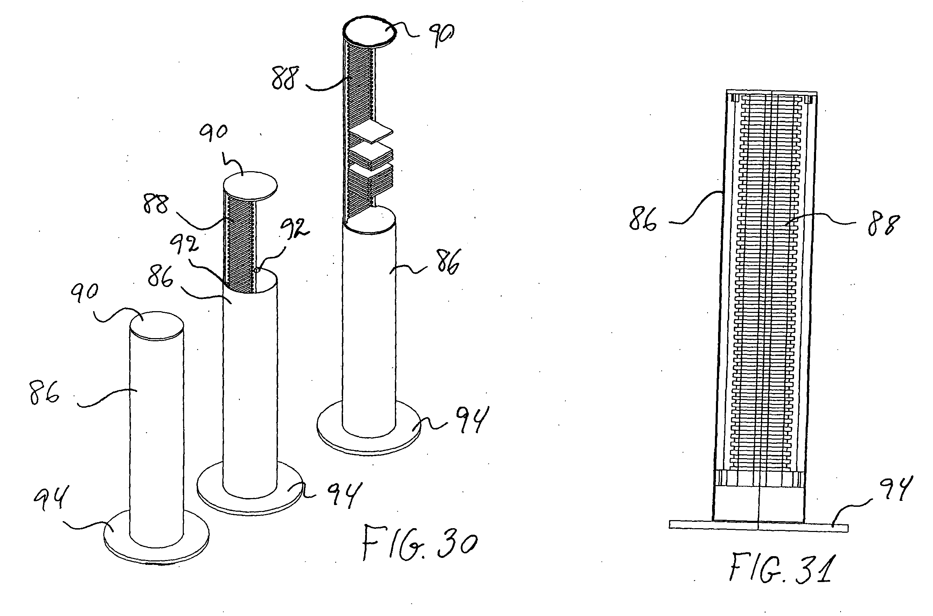

Fig. 30 shows a storage unit 86 according to the invention which has cylindric design. There is provided a rack 88 in the storage unit 86, and on the Figure the storage unit 86 is shown when entirely close when the rack 88 is drawn out partially and when the rack 88 is entirely displaced out of the storage unit 86. The top 90 of the rack 88 simultaneously constitutes the lid of the storage unit 86. The displacement of the rack 88 out of and into the storage unit 86 is effected via a sliding movement along a number of guide bosses 92 which are provided at the inner side of the storage unit 86. The storage unit 86 may e.g. be rotatably connected to a foot 94. Such a cylindric embodiment of the storage unit 86 is particularly advantageous in connection with modem music sets where the loudspeaker system often consists of a number of loudspeaker columns that are mainly cylindric. Hereby is achieved that the storage unit 86 is integrated in the other parts of a music set in such a way that it appears easily melting into the surroundings. Further integration of the storage unit 86 in a music set may be to integrate the storage unit 86 in a loudspeaker column so that it will be an integrated part of the loudspeaker system.

On Fig. 31 is seen a transparent view of a storage unit 86 with a rack 88 inside its interior.

## Claims

1. A rack for box-shaped cassettes and of the type with at least two walls for supporting two sides of the cassettes, where each wall is provided with a surface formed alternating ridges and slots, **characterised in that** for two interacting walls there is provided a displacement of the surfaces so that the ridges and the slots, respectively, in a wall are located opposite respective slots and the ridges in the interacting wall, and that the width of the slots and the ridges are identical.

2. Rack according to claim 1, **characterised in that** the slots/ridges are designed with three straight side faces as seen in section perpendicularly to the longitudinal direction of the slots/ridges, and that the side faces are provided perpendicularly in relation to each other.

3. Rack according to claim 1, **characterised in that** the slots/ridges are designed with curving side faces that have a sinusoidal shape as seen in a sectional view perpendicularly to the longitudinal direction of the slots/ridges.

4. Rack according to any preceding claim, **characterised in that** it includes two adjacent walls that are provided perpendicularly to each other, or two parallel walls disposed opposite each other at a certain distance.

5. Rack according to any preceding claim, **characterised in that** it includes three walls disposed perpendicularly to each other for forming a U-shaped rack for storing the cassettes inside the U, or that the three walls are disposed perpendicularly to each other for forming a T-shaped rack for storing the cassettes in the two corners between the stem of the T and each of the transverse branches of the T.

6. Rack according to any preceding claim, **characterised in that** it is formed by four walls that are disposed perpendicularly to each other for forming an X-shaped rack for storing the cassettes in the four corners between the branches of the X.

7. Rack according to any preceding claim, **characterised in that** it is formed by a bent sheet which is substantially Σ-shaped with slots in the back that interact with projections in the side branches of the Σ, and with projections in the back that interact with slots in the side branches of the Σ.

8. Storage unit with a hollow interior for storing a rack for box-shaped cassettes, **characterised in that** the rack is displaceably mounted inside the interior of the storage unit so that it may be displaced into and out of the storage unit according to need, where the displacement of the rack is manual or automated.

9. Storage unit according to claim 8, **characterised in that** it is rotatable and/or that the rack is rotatable in relation to the storage unit.

10. Storage unit according to claim 8 or 9, **characterised in that** it is equipped with means for automatic selection of cassettes, and possibly light indication of selected cassettes.

11. Storage unit according to any of claims 8 - 10, **characterised in that** it is an integrated part of a piece of furniture or a music set.
